# FASCICULE DE BREVET EUROPEEN

(11) **EP 4 372 485 B1**
(45) Date de publication et mention de la délivrance du brevet: **15.07.2026**
(21) Numéro de dépôt: 22207941.0
(22) Date de dépôt: 17.11.2022
(51) Int. Cl.: B29C 33/38, B29C 33/40, G04B 47/04, A44C 17/04

(54) **FABRICATION D'UN COMPOSANT HORLOGER ET COMPOSANT HORLOGER**
HERSTELLUNG EINER UHRENKOMPONENTE UND UHRENKOMPONENTE
MANUFACTURING OF A TIMEPIECE COMPONENT AND TIMEPIECE COMPONENT

(43) Date de publication de la demande: 22.05.2024
(73) Titulaire: ROLEX SA, 1211 Genève 26 (CH)
(72) Inventeur: Celant, Benjamin, CH-1211 Genève 26 (CH); Di Piazza, Philippe, CH-1211 Genève 26 (CH)
(74) Mandataire: Moinas & Savoye SARL

(56) Documents cités:
- EP-A1- 3 178 344
- EP-A1- 3 712 716
- GB-A- 630 364

## Description

### Introduction

La présente invention concerne un procédé de fabrication d'un composant horloger. Elle porte aussi sur un composant horloger en tant que tel, ainsi qu'une pièce d'horlogerie comprenant un tel composant horloger.

### Etat de l'Art

Dans le domaine de l'horlogerie, il est parfois souhaité d'ajouter des éléments d'ornement sur un composant, par exemple sur un brin de bracelet. Plus généralement, il peut être souhaité d'ajouter différents éléments et/ou fonctionnalités à un composant particulier.

Pour réaliser un tel ajout, il est exigé d'atteindre tout ou partie des objectifs suivants :
- Un résultat satisfaisant sur le plan esthétique et sur le plan du confort au porter ;
- Un résultat aux propriétés mécaniques satisfaisantes ;
- Un résultat fiable et robuste ;
- Un résultat aisé à obtenir, et ce de manière répétable.

Ainsi, le but général de la présente invention est de proposer une solution de fabrication d'un composant horloger comprenant au moins un élément complémentaire et/ou une fonctionnalité supplémentaire, tout en présentant un résultat esthétiquement attractif, aux propriétés mécaniques satisfaisantes, fiable et robuste, et aisé à obtenir, et ce de manière répétable.

Le document EP 3 712 716 A1 montre composant d'habillage horloger, notamment une lunette horlogère, ayant une portion surmoulée.

### Brève description de l'invention

A cet effet, l'invention repose sur un procédé de fabrication d'un composant horloger comprenant au moins un élément de fixation, le procédé comprenant les étapes suivantes :
- Positionner au moins un élément de fixation au sein d'un moule de fabrication par l'intermédiaire d'au moins un élément de guidage ;
- Remplir le moule de fabrication avec un matériau de sorte à surmouler, c'est à dire envelopper au moins partiellement et fixer, l'au moins un élément de fixation dans le matériau ;
- Démouler le composant horloger du moule de fabrication, ce composant horloger (10) étant au moins en partie formé par ledit matériau et l'au moins un élément de fixation.

L'invention porte aussi sur un composant horloger, en particulier un brin de bracelet, comprenant au moins un élément de fixation, le composant horloger étant à base d'un matériau surmoulé enveloppant au moins partiellement et fixant ledit au moins un élément de fixation au sein du composant horloger.

L'invention est plus précisément définie par les revendications.

### Brève description des figures

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une première vue en coupe d'un moule de fabrication d'un brin de bracelet selon un mode de réalisation.
La figure 2 représente une deuxième vue en coupe du moule de fabrication d'un brin de bracelet selon le mode de réalisation.
Les figures 3 à 6 représentent des vues schématiques en coupe d'étapes d'un procédé de fabrication d'un brin de bracelet selon un premier mode de réalisation.
La figure 7 représente une vue partielle en coupe d'un brin de bracelet selon une première variante de réalisation obtenu par le procédé selon le premier mode de réalisation.
La figure 8 représente une vue partielle agrandie en coupe d'un brin de bracelet selon une deuxième variante de réalisation obtenu par le procédé selon le premier mode de réalisation de l'invention.
Les figures 9 à 10 représentent des vues schématiques en coupe d'étapes du procédé de fabrication selon le premier mode de réalisation de l'invention pour obtenir le brin de bracelet selon la deuxième variante de réalisation.
Les figures 11 à 13 représentent des vues schématiques en coupe d'étapes d'un procédé de fabrication d'un brin de bracelet selon un deuxième mode de réalisation de l'invention.
La figure 14 représente une vue partielle agrandie en coupe d'un brin de bracelet selon une première variante de réalisation obtenu par le procédé selon le deuxième mode de réalisation de l'invention.
La figure 15 représente une vue partielle agrandie en coupe d'un brin de bracelet selon une deuxième variante de réalisation obtenu par le procédé selon le deuxième mode de réalisation.
Les figures 16 et 17 représentent des vues schématiques en coupe d'étapes d'un procédé de fabrication d'un brin de bracelet selon un troisième mode de réalisation de l'invention.
La figure 18 représente une vue partielle agrandie en coupe d'un brin de bracelet selon une première variante de réalisation obtenu par le procédé selon le troisième mode de réalisation de l'invention.

Par la suite, nous utiliserons les adjectifs « supérieur » et « inférieur » en référence au futur positionnement du composant horloger. Par exemple, dans le cas d'un brin de bracelet, l'adjectif inférieur désigne l'orientation destinée à venir du côté du poignet d'un porteur et l'adjectif supérieur désigne l'orientation opposée.

L'invention va être décrite, à titre d'exemple, dans le cas spécifique de la fabrication d'un brin de bracelet. Elle pourrait, en variante, être utilisée pour la fabrication d'un autre composant horloger.

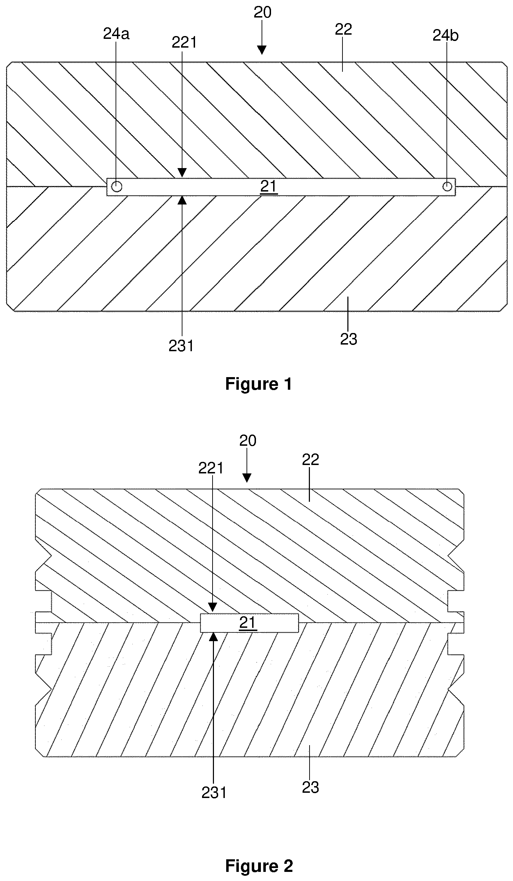

Les figures 1 et 2 représentent un moule 20 utilisé pour la mise en œuvre de l'invention. Un tel moule 20 comprend une cavité 21 délimitée par deux demi-empreintes 22, 23 mobiles l'une par rapport à l'autre. Ces deux demi-empreintes 22, 23 comprennent respectivement des parois 221, 231 qui forment une délimitation de la cavité 21 du moule 20, respectivement les plans supérieur et inférieur de cette cavité 21. Les figures 1 et 2 représentent plus précisément des sections du moule 20 au niveau de la cavité 21, respectivement selon deux plans médians perpendiculaires entre eux. La cavité 21 présente une forme sensiblement plane et rectangulaire, qui correspond à la forme du brin de bracelet à fabriquer, et lesdits deux plans de coupe des deux figures 1, 2 sont des plans médians, respectivement longitudinal, c'est-à-dire orienté selon la longueur de la cavité 21, perpendiculairement à un plan formé par une paroi 221, 231 de cette cavité, et transversal, c'est-à-dire orienté perpendiculairement à la direction longitudinale de la cavité 21, perpendiculairement à un plan formé par une paroi 221, 231 de cette cavité.

Les deux demi-empreintes 22, 23 comprennent respectivement les parois 221, 231 qui sont sensiblement planes et parallèles sur les figures 1 et 2. Alternativement, ces parois 221, 231 peuvent être courbées. Leur forme correspond à la forme des surfaces supérieure et inférieure du brin de bracelet à fabriquer. Des portions de logements 24a, 24b optionnelles sont positionnées au sein de la cavité 21 du moule. Leur fonction sera précisée par la suite.

Le concept de l'invention consiste à positionner un élément de fixation au sein d'un tel moule de fabrication, avant de remplir le moule de fabrication par un matériau, de sorte à surmouler l'élément de fixation, c'est-à-dire l'envelopper au moins partiellement dans ledit matériau, de manière suffisante pour le fixer dans le matériau. Ce matériau correspond au matériau principal du brin de bracelet et/ou au matériau visible depuis la surface supérieure et/ou la surface inférieure du brin de bracelet, et sera appelé « matériau du brin de bracelet » ou plus simplement « matériau » par la suite.

Le remplissage du moule peut être fait par tout moyen, notamment par injection ou moulage par compression. S'il s'agit d'un procédé de moulage par injection, le matériau est par exemple injecté à une pression donnée (typiquement comprise entre 80 bar et 150 bar, voire entre 80 bar et 90 bar) dans la cavité 21, alors que le moule est déjà fermé et présente une température donnée (typiquement comprise entre 150°C et 250°C, voire comprise entre 150°C et 200°C). Dans le cas d'un procédé de moulage par compression, une préforme ou une ébauche de matériau du brin est positionnée sur la paroi 231 avant fermeture du moule, puis est compressée à une température donnée (typiquement comprise entre 150°C et 250°C, voire comprise entre 150°C et 200°C). Dans tous les cas, ce matériau vient se positionner au moins en partie autour d'un ou plusieurs éléments de fixation, pour les envelopper et les fixer au brin de bracelet : ce matériau vient donc surmouler le ou les éléments de fixation.

Avantageusement, le matériau est un élastomère ou à base d'élastomère, c'est-à-dire comprenant au moins 50% en poids d'élastomère. Notamment, le matériau élastomère peut être un fluoro-élastomère (FKM, FFKM ou FEPM), ou un caoutchouc naturel (NR) ou synthétique (SBR, HNBR, EPDM), ou un vinyle méthylsilicone (VMQ) ou un fluorosilicone (FVMQ). Plus généralement, le matériau du composant peut être un polymère. Il peut notamment s'agir d'un polymère thermoplastique ou thermodurci.

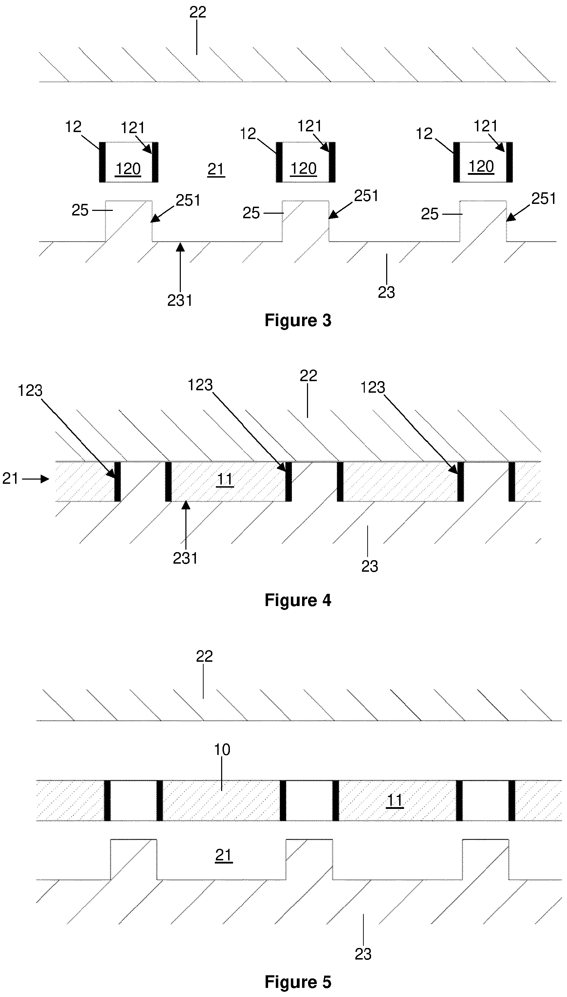

Un premier mode de réalisation d'un procédé de fabrication d'un brin de bracelet va maintenant être détaillé en référence aux figures 3 à 6.

La figure 3 illustre une première étape du procédé selon le premier mode, qui consiste à positionner au moins un élément de fixation 12 au sein du moule 20 de fabrication par l'intermédiaire d'au moins un élément de guidage 25. Dans l'exemple illustré, trois éléments de fixation 12 sont positionnés, chacun par l'intermédiaire d'un élément de guidage 25. Il y a ainsi autant d'éléments de guidage 25 que d'éléments de fixation 12.

Dans ce premier mode de réalisation, chaque élément de guidage 25 est un élément saillant, fixé ou venu de matière sur une demi-empreinte 23 du moule 20, de préférence sur une demi-empreinte 23 fixe du moule 20.

Par exemple, au moins un élément de guidage 25 peut être usiné, notamment fabriqué par électroérosion directement sur la demi-empreinte 23. Alternativement, au moins un élément de guidage 25 peut être fabriqué sur une plaque annexe, qui est ensuite fixée sur la demi-empreinte 23. Alternativement encore, au moins un élément de guidage 25 peut être rapporté, notamment par chassage, au sein d'une ouverture formée sur la demi-empreinte 23.

Dans ce premier mode de réalisation, chaque élément de guidage 25 se présente sous la forme d'un plot cylindrique qui fait saillie de la paroi 231 de la demi-empreinte 23 inférieure, s'étendant ainsi dans la cavité 21 du moule 20. Le contour du plot forme au moins partiellement une première surface de guidage 251, qui est prévue pour coopérer avec une deuxième surface de guidage 121, formée sur l'élément de fixation 12.

L'élément de fixation 12 prend, quant à lui, la forme d'une bague dotée d'une ouverture 120 qui est prévue pour réceptionner le plot. La surface intérieure de la bague, délimitant l'ouverture 120, forme la deuxième surface de guidage 121. Dans ce mode de réalisation, chaque élément de fixation 12 s'étend sensiblement sur toute la hauteur de la cavité 21 du moule 20 (au jeu d'assemblage près).

Le procédé comprend ensuite une deuxième étape, représentée par la figure 4, consistant à remplir le moule 20 de fabrication avec un matériau 11 de sorte à surmouler l'au moins un élément de fixation 12 dans le matériau 11.

Avantageusement, dans cette deuxième étape, l'élément de guidage 25 permet de faire obstacle à toute entrée de matériau ou de limiter considérablement l'entrée de matériau au sein de l'ouverture 120 de l'élément de fixation 12. Le contour extérieur de l'élément de fixation 12 forme, quant à lui, au moins une surface d'accroche 123 prévue pour venir en contact avec le matériau 11 injecté ou compressé autour de lui.

Le procédé comprend ensuite une troisième étape, représentée par la figure 5, consistant à démouler le composant horloger 10, c'est-à-dire le brin de bracelet, du moule de fabrication 20. Ce composant horloger 10 est ainsi au moins en partie formé par le matériau 11 ayant rempli la cavité 21 du moule 20 et l'au moins un élément de fixation 12, notamment les trois éléments de fixation 12 selon l'exemple illustré. Dans cette étape de démoulage, la demi-empreinte 22 supérieure est écartée de la demi-empreinte 23 inférieure, qui est fixe selon cet exemple de réalisation. En remarque, le résultat obtenu lors de cette étape de démoulage peut n'être qu'une ébauche du brin de bracelet, qui exige encore des opérations de finition, comme des découpes, un traitement de surface, etc., avant d'obtenir le brin de bracelet finalisé.

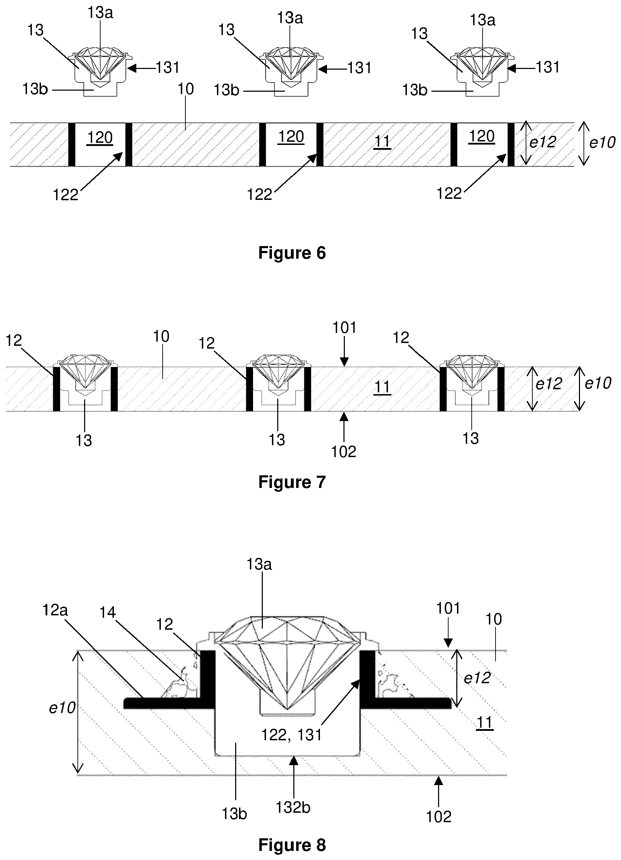

Dans ce premier mode de réalisation, chaque élément de fixation 12 est une bague comprenant une ouverture 120, qui est prévue pour réceptionner un élément d'ornement 13. En particulier, le contour de l'ouverture 120 forme au moins partiellement une deuxième surface de réception 122, qui est prévue pour coopérer avec une première surface de réception 131 d'un élément d'ornement 13. Le procédé comprend ainsi une quatrième étape de fixation d'un élément d'ornement 13 sur au moins un élément de fixation 12, comme représenté par la figure 6. Ces première et deuxième surfaces de réception 122, 131 sont par exemple des surfaces de guidage et/ou de chassage. En remarque, la deuxième surface de réception 122 de l'élément de fixation 12 est ici confondue avec la deuxième surface de guidage 121 susmentionnée. Au préalable, les éventuels débords non souhaités de matériau 11, notamment au sein de l'ouverture 120, qui résulteraient de la deuxième étape de remplissage, peuvent être supprimés selon toute technique connue de l'homme de métier comme, par exemple, un sablage cryogénique.

La figure 7 illustre ainsi une vue partielle en coupe d'une première variante d'un brin de bracelet obtenu par le premier mode de réalisation du procédé de fabrication décrit précédemment.

Selon cette première variante, le composant horloger 10 fabriqué, c'est-à-dire le brin de bracelet, comprend trois éléments de fixation 12, sous la forme de bagues, réceptionnant chacun un élément d'ornement 13. Chacun des éléments de fixation 12 présente une forme de cylindre droit dont la hauteur e12 correspond ou correspond sensiblement à l'épaisseur e10 du brin de bracelet, définie par le matériau 11 en dehors des éléments de fixation 12. Ce matériau 11 est surmoulé ou compressé autour des éléments de fixation 12, notamment sur les surfaces d'accroche 123 des éléments de fixation 12. En remarque, selon ce mode de réalisation, la hauteur des éléments de guidage 25 correspond sensiblement à celle des éléments de fixation 12, et à celle de la cavité 21, qui correspond elle-même à l'épaisseur du brin de bracelet. Les éléments de fixation 12 définissent ainsi des ouvertures 120 traversantes dans l'épaisseur du brin de bracelet.

Afin de favoriser l'accroche du matériau 11 autour des éléments de fixation 12, leurs surfaces d'accroche 123 peuvent être texturées par toute technique connue de l'homme du métier, afin de les rendre particulièrement rugueuses. Alternativement ou complémentairement, ces surfaces peuvent être revêtues d'un primaire d'accroche. Selon cette première variante, la surface d'accroche 123 d'un élément de fixation 12 forme toute la surface périphérique extérieure de la bague cylindrique formant l'élément de fixation 12.

Par ailleurs, selon cette première variante, les éléments d'ornement 13 comprennent chacun un chaton 13b au sein duquel est fixée une pierre 13a visible depuis la surface supérieure 101 du brin de bracelet. Chaque chaton 13b est ici accessible pour permettre, au besoin, un déchassage de l'élément d'ornement 13 depuis la surface inférieure 102 du brin de bracelet.

La figure 8 illustre une vue partielle agrandie d'un brin de bracelet selon une deuxième variante obtenue selon le premier mode de réalisation du procédé. Cette deuxième variante cherche à maximiser l'accroche du matériau 11 sur un élément de fixation 12 tout en limitant localement la flexion d'un brin de bracelet.

Avantageusement, l'élément de fixation 12 comprend ici une première portion cylindrique supérieure, définissant toujours une ouverture centrale, se terminant à sa base par un disque ou une deuxième portion cylindrique agencé autour de la première portion cylindrique, qui définit une portée 12a. L'élément de fixation 12 est ainsi ici une bague à portée. De plus, dans cette deuxième variante particulière, la hauteur e12 de l'élément de fixation 12 est strictement inférieure à l'épaisseur e10 du brin de bracelet. La portée 12a de l'élément de fixation 12 se trouve ainsi noyée dans le matériau 11 du brin de bracelet, à savoir dans l'épaisseur du brin de bracelet, puisque le matériau 11 s'étend de part et d'autre des surfaces supérieure et inférieure de ladite portée 12a. Cette deuxième variante de réalisation permet de minimiser la flexion du brin de bracelet localement, autour de la surface périphérique de l'élément de fixation 12, notamment autour de la première portion cylindrique de l'élément de fixation 12, en particulier au niveau de la portée 12a formée par le disque ou la deuxième portion cylindrique de l'élément de fixation 12.

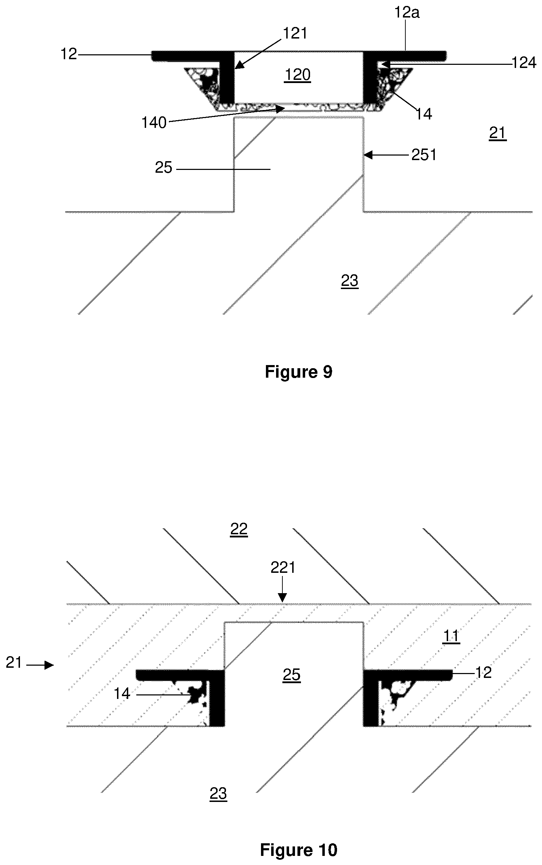

Un élément d'accrochage 14 est associé à l'élément de fixation 12. Dans cette seconde variante de réalisation, cet élément d'accrochage se présente sous la forme d'une bague dotée d'une ouverture 140, dont le diamètre est prévu pour son positionnement autour de l'élément de fixation, selon une étape du procédé selon le premier mode de réalisation plus particulièrement représentée par la figure 9. De plus, cet élément d'accrochage 14 comprend avantageusement une structure alvéolaire de sorte que le matériau 11 du brin de bracelet puisse s'insérer et s'ancrer au sein de cet élément d'accrochage 14, et également entre l'élément de fixation 12 et l'élément d'accrochage 14. Par « structure alvéolaire », nous entendons une structure comprenant une multitude d'ouvertures traversantes qui s'entrecroisent. Avantageusement, l'élément d'accrochage 14 peut se présenter sous la forme d'une mousse métallique. Préférentiellement, l'élément d'accrochage 14 présente une forme conique ou tronconique, de volume augmentant vers l'intérieur de l'épaisseur du brin de bracelet, à savoir selon une direction allant de la surface supérieure vers la surface inférieure du brin de bracelet. Une telle forme a pour avantage de minimiser la visibilité de l'élément d'accrochage 14 depuis la surface supérieure du brin de bracelet. Par ailleurs, une telle forme progressive permet de favoriser l'accroche du matériau 11. Une telle géométrie de l'élément de fixation 12, combinée à un tel élément d'accrochage 14, permet de minimiser très sensiblement, voire d'annuler, le phénomène de bâillement autour de l'élément de fixation 12, à savoir une déformation de l'ouverture du brin autour de l'élément de fixation 12 laissant apparaitre un jour indésirable. En remarque, un tel élément d'accrochage 14 peut en variante être combiné à tous les éléments de fixation de toute variante de réalisation selon l'invention. Il reste optionnel dans tous les cas.

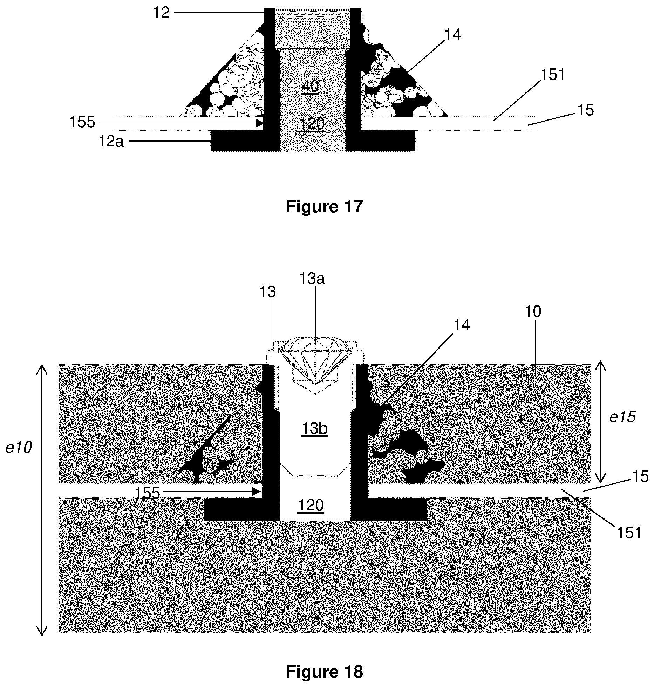

En complément, la hauteur de l'élément de guidage 25 associé à l'élément de fixation 12 durant le procédé permettant d'obtenir un brin de bracelet selon la deuxième variante est ici strictement inférieure à celle de la cavité 21, comme cela sera décrit ci-après. Ainsi, l'ouverture 120 de l'élément de fixation ne forme pas une ouverture traversante dans l'épaisseur du brin de bracelet, mais une ouverture borgne. Il en résulte que l'élément d'ornement 13 fixé sur l'élément de fixation 12, comme décrit en relation avec la première variante de réalisation, n'est pas visible depuis la surface inférieure 102 du brin de bracelet. Néanmoins, la conformation de l'élément d'ornement 13, en particulier du chaton 13b, peut être prévue de sorte à pouvoir être actionnée depuis cette surface inférieure 102. Par exemple, le chaton 13b peut comprendre une surface d'actionnement 132b faisant saillie de l'élément de fixation 12, c'est-à-dire s'étendant plus profondément dans l'épaisseur du brin de bracelet que l'élément de fixation 12, de sorte à présenter une surface inférieure s'étendant parallèlement ou sensiblement parallèlement à la surface inférieure 102 du brin de bracelet, et à proximité de cette surface inférieure. Une telle surface pourra, par exemple, coopérer avec un outillage dédié de sorte à permettre le déchassage de l'élément d'ornement. Alternativement, l'élément d'ornement 13, en particulier le chaton 13b, peut être conformé de sorte à ne pas pouvoir être actionné une fois celui-ci assemblé au sein de l'élément de fixation 12. A titre d'exemple, le chaton 13b peut être noyé au sein de l'élément de fixation 12, comme cela sera illustré en référence avec la figure 18 par la suite.

Les figures 9 et 10 illustrent des étapes du procédé de fabrication selon le premier mode de réalisation permettant d'obtenir un brin de bracelet selon la deuxième variante de réalisation.

La première étape du procédé comprend, en complément du procédé décrit en rapport avec la première variante, le positionnement d'un élément d'accrochage 14 autour d'un élément de fixation 12, en amont ou lors du positionnement de ce dernier autour d'un élément de guidage 25, comme représenté par la figure 9. A cet effet, la première portion cylindrique de l'élément de fixation 12 comprend une surface de réception 124 de l'élément d'accrochage 14 au niveau de sa périphérie extérieure. Ainsi, l'élément de fixation 12 est inséré au sein de l'ouverture 140 centrale de l'élément d'accrochage 14, cet ensemble pouvant ensuite être positionné au sein de la cavité 21 du moule 20 par l'intermédiaire d'un élément de guidage 25, notamment par la coopération des surfaces de guidage 121 et 251 telle que décrite en référence avec la fabrication de la première variante de réalisation. En remarque, selon cette représentation, la demi-empreinte 23 forme la demi-empreinte supérieure du moule, c'est-à-dire destinée à former la surface supérieure du brin de bracelet.

La figure 10 illustre la deuxième étape de remplissage du moule avec un matériau 11 formant l'enveloppe du brin de bracelet. Comme mentionné précédemment, l'élément de guidage 25 ne s'étend pas sur toute la hauteur de la cavité 21, de sorte que du matériau 11 s'étend aussi entre l'extrémité distale de l'élément de guidage 25 et la paroi 221 de la cavité 21 du moule 20, qui forme la surface inférieure du brin de bracelet.

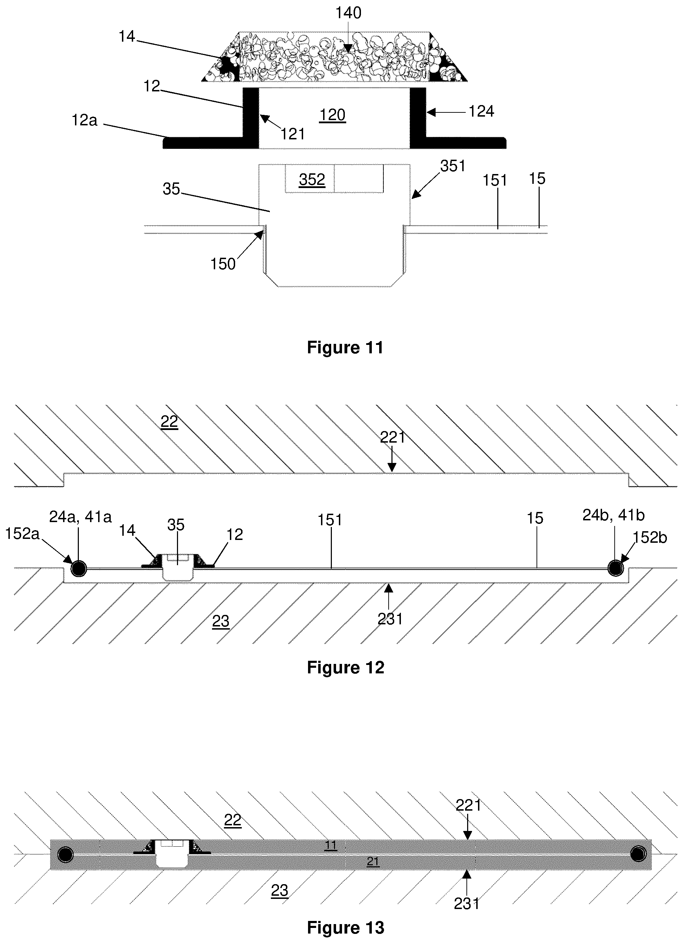

Les figures 11 à 13 illustrent un procédé de fabrication d'un brin de bracelet selon un deuxième mode de réalisation de l'invention.

Ce deuxième mode de réalisation diffère du premier en ce qu'il met en œuvre un insert 15, constitutif du brin de bracelet à fabriquer. D'autre part, selon ce mode de réalisation, l'au moins un élément de fixation 12 est positionné au sein de la cavité 21 du moule grâce à un élément de guidage 35 positionné préalablement sur un tel insert 15 constitutif du brin de bracelet à fabriquer.

Ainsi, comme cela apparaît sur les figures 11 et 12, un insert 15 selon un mode de réalisation particulier se présente sous la forme d'une lame 151, qui peut avantageusement être une lame 151 métallique, en particulier une lame 151 en alliage métallique superélastique. Cette lame comprend deux boucles 152a, 152b disposées respectivement au niveau de chacune de ses extrémités longitudinales. Cet insert 15 sert aussi de support pour le ou les éléments de guidage 35 prévus pour le positionnement du ou des éléments de fixation 12.

Comme cela apparaît sur la figure 11, un élément de guidage 35 peut prendre la forme d'une vis vissée au sein d'une ouverture traversante 150 de la lame 151. La périphérie de la tête de vis constitue ici une première surface de guidage 351, prévue pour coopérer avec une deuxième surface de guidage 121 agencée sur l'élément de fixation 12. L'élément de fixation 12 prend, comme dans les exemples précités détaillant le premier mode de réalisation, la forme d'une bague dotée d'une ouverture 120 formant au moins partiellement la deuxième surface de guidage 121.

Comme représenté par la figure 11, l'élément de fixation 12 correspond sensiblement à celui de la deuxième variante de brin de bracelet obtenu par le procédé selon le premier mode de réalisation, et est associé de la même manière à un élément d'accrochage 14, cet ensemble étant ensuite monté sur un élément de guidage 35, une fois ce dernier positionné sur un insert 15, en dehors ou dans la cavité 21 d'un moule 20, identique au moule 20 mis en œuvre au sein du procédé selon le premier mode de réalisation, comme représenté par la figure 12.

Le matériau 11 remplit ensuite le volume de la cavité 21, comme représenté par la figure 13, surmoulant ainsi l'ensemble comprenant l'insert 15, de sorte à le fixer dans le matériau 11 et donc dans le brin de bracelet résultant.

Le procédé de fabrication selon ce deuxième mode de réalisation comprend ainsi les étapes du premier mode de réalisation et se différencie par le fait qu'il comprend les étapes précisées ci-dessous.

La première étape du procédé comprend une sous-étape préalable consistant à assembler au moins un élément de guidage 35 sur un insert 15. Cet assemblage peut se faire par tout moyen, autre que le vissage décrit précédemment. Ainsi, l'élément de guidage 35 peut en variante se présenter différemment d'une vis telle que représentée. En remarque, cette étape préalable peut aussi comprendre le montage d'un élément d'accrochage 14 autour de l'élément de fixation 12.

La première étape de positionnement dans le moule de fabrication d'au moins un élément de fixation 12 est donc obtenue par l'intermédiaire de cet élément de guidage 35, et par l'intermédiaire d'un insert 15, lui-même préférentiellement positionné au sein du moule de fabrication.

La première étape comprend ainsi, par exemple, le positionnement de l'insert 15 sur la demi-empreinte 23 du moule. Pour cela, des tiges 41a, 41b sont prévues pour s'enfiler respectivement d'une part au sein de boucles 152a, 152b de l'insert 15, en particulier de la lame 151, et d'autre part au sein de portions de logements 24a, 24b formées sur la demi-empreinte 23 du moule. Ainsi, la lame 151 est positionnée au sein de la cavité 21, et elle est maintenue en suspension à distance des parois longitudinales 221, 231 opposées du moule 20 une fois le moule fermé.

Après démoulage du brin de bracelet, le procédé comprend une étape intermédiaire consistant à ôter l'au moins un élément de guidage 35 de l'ébauche de brin de bracelet, notamment par dévissage selon l'exemple illustré. Ensuite, un élément d'ornement 13 peut par exemple être fixé au sein de l'ouverture 120 d'au moins un élément de fixation 12, notamment par chassage, comme décrit en référence avec le premier mode de réalisation.

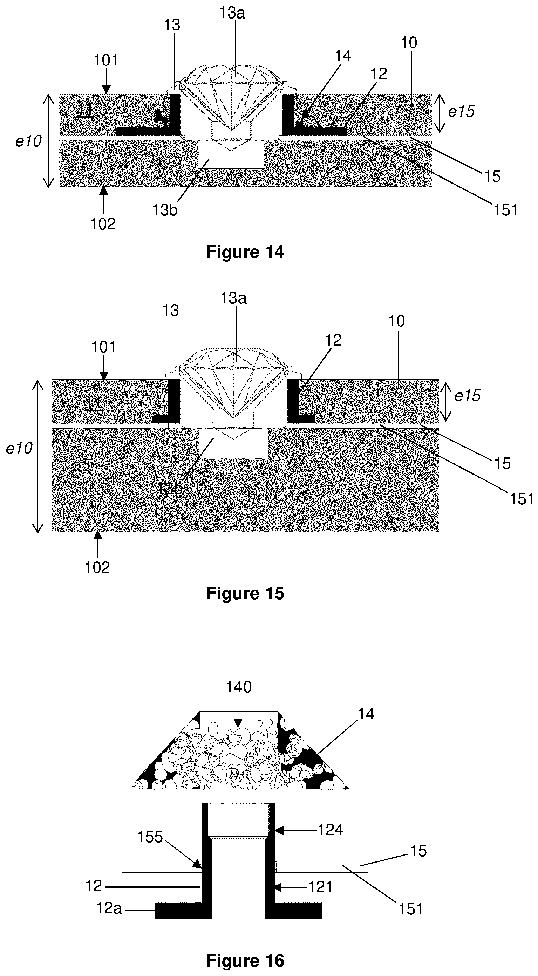

La figure 14 illustre ainsi une première variante de brin de bracelet obtenu par le procédé selon le deuxième mode de réalisation. La lame 151 formant l'insert 15 est positionnée au centre de l'épaisseur e10 du brin de bracelet. Autrement dit, la lame 151 se trouve à équidistance ou sensiblement à équidistance des surfaces supérieure 101 et inférieure 102 du brin de bracelet, avec une distance e15 la séparant de la surface supérieure 101 égale ou sensiblement égale à e10/2. Ainsi, la lame 151 constitue ou se rapproche de la nappe de fibres neutres du brin de bracelet lorsque ce dernier est soumis à une flexion simple. En remarque, cette lame 151 remplit ainsi par ailleurs une fonction de renfort du brin de bracelet.

La figure 15 illustre une deuxième variante de brin de bracelet obtenu par le procédé selon ce deuxième mode de réalisation. Le brin de bracelet se différencie de celui selon la première variante par le fait que la lame 151 est positionnée plus proche de la surface supérieure 101 du brin de bracelet, de sorte à décaler la nappe de fibres neutres vers cette surface supérieure 101. Cela est en effet rendu possible par le fait que le matériau de la lame 151 est avantageusement plus rigide que le matériau du composant horloger, en particulier du brin de bracelet, à savoir le matériau enveloppant au moins partiellement au moins un élément de fixation. Ainsi, dans cette conception, les épaisseurs respectent les conditions suivantes : e15 < e10/2, voire e15 < e10/3. Pour obtenir le brin de bracelet selon cette deuxième variante de réalisation, les positions des logements 24a, 24b au sein de la cavité 21 du moule peuvent être décalées de sorte à rapprocher la lame 151 d'une paroi longitudinale d'une demi-empreinte du moule 20, lors de la première étape du procédé. Cette deuxième variante de réalisation présente l'avantage de minimiser les phénomènes de traction autour de l'élément de fixation 12 lorsque le brin de bracelet est fléchi. Des essais montrent en effet qu'une telle conception permet de limiter sensiblement, voire d'obvier, tout phénomène de bâillement autour de l'élément de fixation 12, et ce sans nécessiter la mise en place d'un élément d'accrochage 14. Il est également possible de minimiser la dimension, en particulier le diamètre de la portée 12a, voire même de supprimer la portée 12a de l'élément de fixation 12. Une telle conception selon cette deuxième variante de réalisation a donc aussi pour avantage de limiter l'encombrement des éléments nécessaires à la fixation d'un élément d'ornement 13 sur le brin de bracelet, d'une part par la suppression de l'élément d'accrochage 14, et d'autre part par la minimisation du format de l'élément de fixation 12. Une telle conception a donc pour avantage de permettre le rapprochement de différents éléments d'ornement, et donc éventuellement de maximiser leur nombre sur le brin de bracelet, par exemple à des fins esthétiques.

Dans ces réalisations, l'élément de fixation 12 résultant repose sur l'insert 15.

Le procédé selon le troisième mode de réalisation constitue une alternative au deuxième mode. L'au moins un élément de fixation 12 est ici positionné sur l'insert 15 non pas par un élément de guidage 35 positionné préalablement sur la lame 151, mais directement au sein d'une ouverture 155 formée sur la lame faisant office d'élément de guidage 35, comme représenté par la figure 16. A cet effet, l'au moins un élément de fixation 12 comprend une surface de guidage 121 prévue pour coopérer avec le contour de l'ouverture 155, qui forme ainsi un élément de guidage 35. En particulier, l'au moins un élément de fixation 12 se présente sous la forme d'une bague dont la périphérie extérieure comprend la surface de guidage 121 qui est prévue pour venir se loger dans l'ouverture 155. Afin de permettre le maintien de la bague sur la lame 151, la périphérie extérieure de la bague comprend également une surface 124 de réception, notamment de chassage, d'un élément d'accrochage 14 en forme de bague. En outre, l'élément de fixation 12 comprend également une portée 12a afin de permettre sa retenue axiale sur la lame 151. En remarque, alternativement ou complémentairement, l'insert 15 pourrait présenter ou comprendre toute autre forme remplissant la fonction d'élément de guidage, comme une saillie par exemple.

Les figures 16 et 17 illustrent schématiquement des étapes du procédé de fabrication selon ce troisième mode de réalisation.

Lors de la première étape représentée par la figure 16, l'élément de fixation 12 est assemblé sur un insert 15, qui se présente sous la forme d'une lame 151, comme dans le deuxième mode de réalisation. Dans cette réalisation, l'élément de fixation 12 est enfilée dans une ouverture 155 depuis une face inférieure de la lame 151, puis un élément d'accrochage 14 est fixé sur l'élément de fixation 12 depuis la face supérieure opposée, notamment par chassage autour de la surface extérieure de l'élément de fixation 12.

La première étape comprend aussi une nouvelle sous-étape, représentée par la figure 17, mise en œuvre avant la deuxième étape de remplissage du moule par le matériau 11 du brin de bracelet. Cette sous-étape consiste à obturer l'ouverture 120 de l'élément de fixation 12 par un matériau de remplissage. Par exemple, ce matériau de remplissage peut être un silicone à deux composants, contenant du vinyle, de l'acide silicique et des matières d'agrégation, qui présente l'avantage de polymériser en quelques minutes. Par exemple, ce matériau peut être celui connu par sa dénomination commerciale de Plastiform^{™} F50 ou Plastiform^{™} F85. Le matériau de remplissage est par exemple déposé par le biais d'un pistolet doseur, puis est immédiatement durci de sorte à former un obstacle 40 à toute rentrée de matériau 11 durant la deuxième étape au sein de l'ouverture 120 de l'élément de fixation 12.

Après le démoulage, le procédé comprend une étape intermédiaire de retrait de l'obstacle 40 formé par le matériau de remplissage déposé dans l'ouverture 120 de l'élément de fixation 12, pour libérer cette ouverture 120.

Les autres étapes du procédé restent identiques à celles décrites en référence avec le deuxième mode de réalisation.

La figure 18 illustre, à titre d'exemple, une première variante de réalisation du brin de bracelet obtenu par le procédé selon ce troisième mode de réalisation dans laquelle la lame 151 formant l'insert 15 se trouve sensiblement au milieu de l'épaisseur du brin de bracelet. En deuxième variante non représentée, cette lame pourrait être positionnée plus proche de la surface supérieure du brin de bracelet, comme décrit dans le cadre du procédé selon le deuxième mode de réalisation permettant d'obtenir un brin de bracelet selon la deuxième variante. En remarque, une telle deuxième variante de brin présente aussi l'avantage de minimiser le format de l'élément d'accrochage 14, outre la simplification de l'élément de fixation 12. Dans ces réalisations, l'élément de fixation 12 résultant est fixé sur l'insert 15.

Dans tous les modes de réalisation, l'élément de fixation 12 peut être fabriqué en tout matériau susceptible de résister aux températures associées au procédé. Avantageusement, ce matériau est plus particulièrement adapté de façon à permettre le chassage de l'élément d'ornement 13. A titre d'exemple, ce matériau peut être un alliage métallique tel qu'un alliage cuivreux comme le laiton ou le CuBe2, ou encore un acier inoxydable.

Dans les variantes de réalisation décrites précédemment, les éléments de fixation sont prévus pour réceptionner des éléments d'ornement. Ils pourraient naturellement être prévus pour recevoir tout autre élément, par exemple dans le but de remplir une nouvelle fonctionnalité. Par exemple, dans une construction particulière de bracelet comprenant une boucle à ardillon, les ouvertures des éléments de fixation pourraient former une série d'ouvertures alignées, prévues pour réceptionner l'ardillon et donc participer au réglage de la longueur du bracelet. Une telle construction aurait pour avantage de supprimer toute déformation de ces ouvertures prévues pour réceptionner l'ardillon, qui sont usuellement formées directement sur le brin de bracelet en découpant le matériau. Un élément de fixation selon l'invention peut donc remplir des fonctions diverses, et il n'y a donc pas nécessairement une fixation permanente d'un élément distinct dans un élément de fixation.

D'autre part, comme décrit précédemment, dans toutes les variantes de réalisation, un élément de fixation peut prendre la forme d'une bague, comprenant une portée ou non. Une telle portée a pour avantage limiter localement la flexion du brin de bracelet autour de l'élément de fixation. Naturellement, l'invention ne se limite pas à la forme représentée des éléments de fixation, qui peuvent prendre toute autre forme selon les fonctionnalités recherchées. Par exemple, un élément de fixation peut se présenter sous la forme d'une bague de forme cylindrique ou tronconique ou de forme quelconque, agencée autour d'un axe, par exemple de section transversale audit axe de forme annulaire. Préférentiellement, dans toutes les variantes de réalisation, l'élément de fixation, en particulier la bague faisant office d'élément de fixation, comprend une surface qui affleure la surface supérieure du composant horloger.

Dans les modes de réalisation décrits, un élément de fixation est positionné dans un moule par l'intermédiaire d'au moins un élément de guidage. Un tel élément de guidage peut se présenter selon différentes formes. Par exemple, il peut être un élément faisant saillie selon une certaine direction au sein d'une cavité du moule de fabrication, notamment être agencé symétriquement autour d'un axe parallèle à ladite direction, notamment de forme cylindrique ou tronconique et/ou de section transversale audit axe de forme circulaire. Complémentairement ou alternativement, l'au moins un élément de guidage pourrait se présenter sous la forme d'un élément magnétique permettant le positionnement d'un élément de fixation. Dans ce cas de figure spécifique, un tel élément de guidage ne se présente pas nécessairement sous la forme d'un élément faisant saillie au sein d'une cavité d'un moule.

Selon une variante de réalisation particulière de brin de bracelet comprenant un insert, il peut naturellement être envisageable qu'au moins un élément de fixation puisse être disposé et/ou positionné indépendamment dudit insert, par exemple par le biais d'au moins un élément de guidage compris dans le moule de fabrication. Autrement dit, il est possible d'obtenir une variante de brin comprenant un insert en mettant en œuvre au moins partiellement le procédé selon le premier mode.

De plus, dans toutes les variantes de réalisation, l'élément de fixation peut être combiné ou non à un élément d'accrochage, ce dernier étant prévu pour maximiser l'ancrage du matériau constituant l'enveloppe du composant autour de l'élément de fixation. Préférentiellement, un élément d'accrochage peut être en mousse d'aluminium ou de titane.

Comme décrit précédemment, un élément d'ornement peut se présenter sous la forme d'un assemblage tel qu'une pierre sertie au sein d'un chaton. La pierre peut par exemple être une pierre naturelle telle qu'une pierre précieuse (diamant, rubis, saphir, émeraude) ou une pierre fine comme le jaspe, par exemple. La pierre peut aussi être organique, et peut par exemple se présenter sous la forme d'une perle ou de nacre. Le chaton peut par exemple être fabriqué en un alliage précieux tel qu'un alliage à base d'or.

Alternativement, l'élément d'ornement peut être fait d'un seul tenant. Il peut par exemple être fabriqué en une céramique, par exemple une céramique principalement ou majoritairement composée de zircone, ou d'alumine, ou de nitrure de silicium, ou de carbure de bore, ou de nitrure d'aluminium. Alternativement, l'élément d'ornement peut aussi être fait en un matériau composite comme un composite alumine-zircone ZTA / ATZ. Alternativement encore, l'élément d'ornement peut être fait en un alliage métallique précieux tel qu'un alliage à base d'or ou de platine. Il peut par ailleurs comprendre un motif.

Dans le cas d'utilisation d'un insert, qui remplit notamment avantageusement une fonction de renfort, cet insert a été décrit comme se présentant sous la forme d'une lame. Naturellement, une telle lame peut occuper différentes surfaces, s'étendre sensiblement de manière continue sur une dimension significative d'un brin de bracelet, par exemple sur au moins 50%, voire 70% de sa longueur, ou en variante prendre une dimension restreinte, se trouver uniquement au niveau du ou des éléments de fixation. De plus, l'invention ne se limite pas à un insert présentant la forme d'une lame.

Enfin, l'invention a été décrite dans le cadre d'un brin de bracelet. Elle pourrait toutefois être appliquée à tout composant horloger qui pourrait se présenter au moins en partie dans un matériau adapté à un moulage tel que décrit. Par exemple, le composant horloger pourrait être une lunette ou un disque de lunette rapporté sur une bague de lunette. Les éléments d'ornement pourraient ainsi, par exemple, figurer des index.

L'invention porte aussi directement sur un brin de bracelet, ou plus généralement un composant horloger, comprenant un élément de fixation surmoulé par un matériau, tel que décrit. Optionnellement, le composant horloger comprend un insert ou renfort, aussi surmoulé par ledit matériau.

L'invention porte aussi sur une pièce d'horlogerie, notamment une montre-bracelet, comprenant un tel brin de bracelet, ou plus généralement un tel composant horloger.

## Revendications

1. Procédé de fabrication d'un composant horloger (10) comprenant au moins un élément de fixation (12), le procédé comprenant les étapes suivantes :
- Positionner au moins un dit élément de fixation (12) au sein d'un moule de fabrication (20) par l'intermédiaire d'au moins un élément de guidage (25 ; 35) ;
- Remplir le moule de fabrication (20) avec un matériau de sorte à surmouler, c'est à dire envelopper au moins partiellement et fixer, l'au moins un élément de fixation (12) dans le matériau ;
- Démouler le composant horloger (10) du moule de fabrication (20), ce composant horloger (10) étant au moins en partie formé par ledit matériau et l'au moins un élément de fixation (12), le procédé étant **caractérisé en ce qu'**il comprend une étape intermédiaire consistant à ajouter un élément d'accrochage (14), notamment une bague d'accrochage, agencé au moins partiellement autour de l'au moins un élément de fixation (12), notamment un élément d'accrochage présentant une structure alvéolaire, comme une mousse d'aluminium ou de titane.

2. Procédé de fabrication d'un composant horloger (10) selon la revendication précédente, **caractérisé en ce que** le moule de fabrication (20) comprend au moins deux demi-empreintes complémentaires (22, 23) délimitant une cavité (21) dont la forme correspond ou correspond sensiblement à celle du composant horloger à fabriquer, et **en ce que** :
- Au moins une desdites demi-empreintes (22, 23) comprend l'au moins un élément de guidage (25) pour permettre le positionnement de l'au moins un élément de fixation (12) au sein de la cavité (21) du moule de fabrication ; et/ou
- Au moins un composant indépendant desdites demi-empreintes (22, 23) et du composant horloger (10) est ajouté dans le moule de fabrication (20), ce composant indépendant comprenant l'au moins un élément de guidage (25) pour permettre le positionnement de l'au moins un élément de fixation (12) au sein de la cavité (21) du moule de fabrication ; et/ou
- Au moins un insert (15) du composant horloger à fabriquer est positionné au sein de la cavité (21) dudit moule de fabrication (20), cet insert (15) comprenant l'au moins un élément de guidage (35) pour permettre le positionnement de l'au moins un élément de fixation (12) au sein de la cavité (21) du moule de fabrication, l'au moins un élément de guidage (35) appartenant à l'insert (15) sous la forme d'une saillie, en particulier provisoirement fixé à l'insert (15) puis retiré au démoulage du composant horloger, ou d'une ouverture (155) de l'insert (15).

3. Procédé de fabrication d'un composant horloger (10) selon l'une des revendications précédentes, **caractérisé en ce que** l'au moins un élément de guidage (25 ; 35) est un élément faisant saillie selon une direction au sein d'une cavité (21) du moule de fabrication (20), notamment agencé symétriquement autour d'un axe parallèle à ladite direction, notamment de forme cylindrique ou tronconique et/ou de section transversale audit axe de forme circulaire, et **en ce que** l'au moins un élément de fixation (12) s'étend autour de l'au moins un élément de guidage (25 ; 35), et se présente notamment sous la forme d'une bague de forme cylindrique ou tronconique et/ou de section transversale audit axe de forme annulaire et/ou sous la forme d'une bague à portée.

4. Procédé de fabrication d'un composant horloger (10) selon l'une des revendications précédentes, **caractérisé en ce que** l'au moins un élément de fixation (12) est positionné au sein de la cavité (21) du moule de fabrication (20) et s'étend sur toute la hauteur de cette cavité (21) d'une première demi-empreinte (22) jusqu'à une deuxième demi-empreinte (23) distincte, ou s'étend sur une partie seulement de la hauteur de cette cavité (21) entre une première demi-empreinte (22) et une deuxième demi-empreinte (23) distincte.

5. Procédé de fabrication d'un composant horloger (10) selon l'une des revendications précédentes, **caractérisé en ce qu'**il comprend une étape intermédiaire consistant à texturer et/ou à ajouter un primaire d'accrochage sur une surface de l'au moins un élément de fixation (12) destinée à recevoir le surmoulage dudit matériau.

6. Procédé de fabrication d'un composant horloger selon l'une des revendications précédentes, **caractérisé en ce que** l'étape consistant à remplir le moule de fabrication (20) avec un matériau consiste en une injection sous pression dudit matériau dans une cavité (21) du moule de fabrication (20) ou consiste en un moulage par compression d'une ébauche dudit matériau.

7. Procédé de fabrication d'un composant horloger selon l'une des revendications précédentes, **caractérisé en ce qu'**il comprend une étape de fixation d'un élément d'ornement (13) sur l'au moins un élément de fixation (12), notamment par chassage.

8. Composant horloger (10), en particulier brin de bracelet, comprenant au moins un élément de fixation (12), le composant horloger (10) étant à base d'un matériau surmoulé enveloppant au moins partiellement et fixant ledit au moins un élément de fixation (12) au sein du composant horloger (10) et comprenant un élément d'accrochage (14), notamment une bague d'accrochage, agencé au moins partiellement autour de l'élément de fixation (12), notamment un élément d'accrochage présentant une structure alvéolaire, comme une mousse d'aluminium ou de titane, dans laquelle ledit matériau est inséré.

9. Composant horloger (10), en particulier brin de bracelet, selon la revendication précédente, **caractérisé en ce que** l'au moins un élément de fixation (12) se présente sous la forme d'une bague de forme cylindrique ou tronconique et/ou de section transversale de forme annulaire, et/ou sous la forme d'une bague à portée.

10. Composant horloger (10), en particulier brin de bracelet, selon la revendication 8 ou 9, **caractérisé en ce que** l'au moins un élément de fixation (12) s'étend sur toute la hauteur ou épaisseur du composant horloger (10), ou s'étend sur une partie seulement de la hauteur du composant horloger (10).

11. Composant horloger (10), en particulier brin de bracelet, selon l'une des revendications 8 à 10, **caractérisé en ce qu'**il comprend au moins un insert (15) sur lequel l'au moins un élément de fixation (12) repose ou est fixé, notamment autour d'une saillie ou dans une ouverture (155) de l'insert (15) ou sur une surface de l'insert (15).

12. Composant horloger (10), en particulier brin de bracelet, selon l'une des revendications 8 à 11, **caractérisé en ce que** l'au moins un élément de fixation (12) comprend une surface texturée et/ou une surface comprenant un primaire d'accrochage sur laquelle ledit matériau est surmoulé.

13. Composant horloger (10), en particulier brin de bracelet, selon l'une des revendications 8 à 12, **caractérisé en ce que** ledit matériau est un polymère thermoplastique ou thermodurci ou un élastomère ou à base d'élastomère, notamment un fluoro-élastomère (FKM, FFKM ou FEPM), ou un caoutchouc naturel (NR) ou synthétique (SBR, HNBR, EPDM), ou un vinyle méthylsilicone (VMQ) ou un fluorosilicone (FVMQ), et/ou **en ce que** l'au moins un élément de fixation (12) est en métal ou en alliage métallique.

14. Composant horloger (10), en particulier brin de bracelet, selon l'une des revendications 8 à 13, **caractérisé en ce qu'**il comprend un élément d'ornement (13), comme une pierre dans un chaton ou un élément monobloc, fixé, notamment par chassage, sur l'au moins un élément de fixation (12) ou **en ce qu'**il comprend plusieurs éléments de fixation (12) formant des portions de fixation d'un brin de bracelet, comme des trous pour une boucle à ardillon.

15. Pièce d'horlogerie, notamment montre-bracelet, **caractérisée en ce qu'**elle comprend au moins un composant horloger (10) selon l'une des revendications 8 à 14.

## Patentansprüche

1. Verfahren zur Herstellung eines Uhrenbauteils (10), das mindestens ein Befestigungselement (12) umfasst, wobei das Verfahren die folgenden Schritte umfasst:
• Positionieren mindestens eines Befestigungselements (12) in einer Fertigungsform (20) mittels mindestens eines Führungselements (25; 35);
• Befüllen der Fertigungsform (20) mit einem Material, um das mindestens eine Befestigungselement (12) zu umspritzen, d. h. mindestens teilweise zu umhüllen und in dem Material zu fixieren;
• Entformen des Uhrenbauteils (10) aus der Fertigungsform (20), wobei dieses Uhrenbauteil (10) zumindest teilweise durch das genannte Material und das mindestens eine Befestigungselement (12) gebildet wird, wobei das Verfahren **dadurch gekennzeichnet ist, dass** es einen Zwischenschritt umfasst, der darin besteht, ein Haftelement (14), insbesondere eine Haftbuchse, das zumindest teilweise um das mindestens eine Befestigungselement (12) angeordnet ist, hinzuzufügen, insbesondere ein Haftelement mit einer Wabenstruktur, wie einem Aluminium- oder Titanschaum.

2. Verfahren zur Herstellung eines Uhrenbauteils (10) nach dem vorhergehenden Anspruch, **dadurch gekennzeichnet, dass** die Fertigungsform (20) mindestens zwei komplementäre Formhälften (22, 23) umfasst, die einen Hohlraum (21) begrenzen, dessen Form der des herzustellenden Uhrenbauteils entspricht oder im Wesentlichen entspricht, und dass:
• mindestens eine der genannten Formhälften (22, 23) das mindestens eine Führungselement (25) umfasst, um die Positionierung des mindestens einen Befestigungselements (12) innerhalb des Hohlraums (21) der Fertigungsform zu ermöglichen; und/oder
• mindestens ein von den genannten Formhälften (22, 23) und dem Uhrenbauteil (10) unabhängiges Bauteil in die Fertigungsform (20) eingefügt wird, wobei dieses unabhängige Bauteil das mindestens eine Führungselement (25) umfasst, um die Positionierung des mindestens einen Befestigungselements (12) innerhalb des Hohlraums (21) der Fertigungsform zu ermöglichen; und/oder
• mindestens ein Einlegeteil (15) des herzustellenden Uhrenbauteils innerhalb des Hohlraums (21) der genannten Fertigungsform (20) positioniert wird, wobei dieses Einlegeteil (15) das mindestens eine Führungselement (35) umfasst, um die Positionierung des mindestens einen Befestigungselements (12) innerhalb des Hohlraums (21) der Fertigungsform zu ermöglichen, wobei das mindestens eine Führungselement (35) zum Einlegeteil (15) in Form eines Vorsprungs gehört, der insbesondere vorübergehend am Einlegeteil (15) befestigt und dann beim Entformen des Uhrenbauteils entfernt wird, oder in Form einer Öffnung (155) des Einlegeteils (15).

3. Verfahren zur Herstellung eines Uhrenbauteils (10) nach einem der vorhergehenden Ansprüche, **dadurch gekennzeichnet, dass** das mindestens eine Führungselement (25; 35) ein Element ist, das in einer Richtung innerhalb eines Hohlraums (21) der Fertigungsform (20) hervorsteht, insbesondere symmetrisch um eine zu dieser Richtung parallele Achse angeordnet, insbesondere zylindrisch oder kegelstumpfförmig und/oder mit einem zur genannten Achse transversalen Querschnitt kreisförmiger Form, und dass sich das mindestens eine Befestigungselement (12) um das mindestens eine Führungselement (25; 35) erstreckt und insbesondere die Form einer zylindrischen oder kegelstumpfförmigen Buchse und/oder eines zur genannten Achse transversalen Querschnitts ringförmiger Gestalt und/oder die Form einer Stufenbuchse aufweist.

4. Verfahren zur Herstellung eines Uhrenbauteils (10) nach einem der vorhergehenden Ansprüche, **dadurch gekennzeichnet, dass** das mindestens eine Befestigungselement (12) innerhalb des Hohlraums (21) der Fertigungsform (20) positioniert ist und sich über die gesamte Höhe dieses Hohlraums (21) von einer ersten Formhälfte (22) bis zu einer davon verschiedenen zweiten Formhälfte (23) erstreckt, oder sich nur über einen Teil der Höhe dieses Hohlraums (21) zwischen einer ersten Formhälfte (22) und einer davon verschiedenen zweiten Formhälfte (23) erstreckt.

5. Verfahren zur Herstellung eines Uhrenbauteils (10) nach einem der vorhergehenden Ansprüche, **dadurch gekennzeichnet, dass** es einen Zwischenschritt umfasst, der darin besteht, eine Oberfläche des mindestens einen Befestigungselements (12), die für die Aufnahme der Umspritzung des genannten Materials bestimmt ist, zu texturieren und/oder mit einem Haftvermittler zu versehen.

6. Verfahren zur Herstellung eines Uhrenbauteils nach einem der vorhergehenden Ansprüche, **dadurch gekennzeichnet, dass** der Schritt, der darin besteht, die Fertigungsform (20) mit einem Material zu befüllen, in einem Druckspritzguss des genannten Materials in einen Hohlraum (21) der Fertigungsform (20) besteht oder in einem Pressformen eines Rohlings des genannten Materials besteht.

7. Verfahren zur Herstellung eines Uhrenbauteils nach einem der vorhergehenden Ansprüche, **dadurch gekennzeichnet, dass** es einen Schritt zur Befestigung eines Zierelements (13) an dem mindestens einen Befestigungselement (12) umfasst, insbesondere durch Einpressen.

8. Uhrenbauteil (10), insbesondere Armbandhalbstück, das mindestens ein Befestigungselement (12) umfasst, wobei das Uhrenbauteil (10) auf einem umgespritzten Material basiert, das das genannte mindestens eine Befestigungselement (12) mindestens teilweise umhüllt und innerhalb des Uhrenbauteils (10) fixiert, und ein Haftelement (14) umfasst, insbesondere eine Haftbuchse, das zumindest teilweise um das Befestigungselement (12) angeordnet ist, insbesondere ein Haftelement mit einer Wabenstruktur, wie einem Aluminium- oder Titanschaum, in die das genannte Material eingebettet ist.

9. Uhrenbauteil (10), insbesondere Armbandhalbstück, nach dem vorhergehenden Anspruch, **dadurch gekennzeichnet, dass** das mindestens eine Befestigungselement (12) die Form einer zylindrischen oder kegelstumpfförmigen Buchse und/oder eines Querschnitts ringförmiger Gestalt aufweist und/oder die Form einer Stufenbuchse aufweist.

10. Uhrenbauteil (10), insbesondere Armbandhalbstück, nach Anspruch 8 oder 9, **dadurch gekennzeichnet, dass** sich das mindestens eine Befestigungselement (12) über die gesamte Höhe oder Dicke des Uhrenbauteils (10) erstreckt oder sich nur über einen Teil der Höhe des Uhrenbauteils (10) erstreckt.

11. Uhrenbauteil (10), insbesondere Armbandhalbstück, nach einem der Ansprüche 8 bis 10, **dadurch gekennzeichnet, dass** es mindestens ein Einlegeteil (15) umfasst, auf dem das mindestens eine Befestigungselement (12) aufliegt oder befestigt ist, insbesondere um einen Vorsprung oder in einer Öffnung (155) des Einlegeteils (15) oder auf einer Oberfläche des Einlegeteils (15).

12. Uhrenbauteil (10), insbesondere Armbandhalbstück, nach einem der Ansprüche 8 bis 11, **dadurch gekennzeichnet, dass** das mindestens eine Befestigungselement (12) eine texturierte Oberfläche und/oder eine Oberfläche mit einem Haftvermittler umfasst, auf die das genannte Material aufgespritzt ist.

13. Uhrenbauteil (10), insbesondere Armbandhalbstück, nach einem der Ansprüche 8 bis 12, **dadurch gekennzeichnet, dass** das genannte Material ein thermoplastisches oder duroplastisches Polymer oder ein Elastomer oder ein Elastomer-basiertes Material ist, insbesondere ein Fluorelastomer (FKM, FFKM oder FEPM), oder ein Natur- (NR) oder Synthesekautschuk (SBR, HNBR, EPDM), oder ein Vinylmethylsilikon (VMQ) oder ein Fluorsilikon (FVMQ), und/oder dass das mindestens eine Befestigungselement (12) aus Metall oder einer Metalllegierung besteht.

14. Uhrenbauteil (10), insbesondere Armbandhalbstück, nach einem der Ansprüche 8 bis 13, **dadurch gekennzeichnet, dass** es ein Zierelement (13) umfasst, wie einen Stein in einer Fassung oder ein einstückiges Element, das insbesondere durch Einpressen an dem mindestens einen Befestigungselement (12) befestigt ist, oder dass es mehrere Befestigungselemente (12) umfasst, die Befestigungsabschnitte eines Armbandhalbstücks bilden, wie Löcher für eine Dornschließe.

15. Uhrwerk, insbesondere Armbanduhr, **dadurch gekennzeichnet, dass** es mindestens ein Uhrenbauteil (10) nach einem der Ansprüche 8 bis 14 umfasst.

## Claims

1. Process for manufacturing a timepiece component (10) comprising at least one fastening element (12), the process comprising the following steps:
- positioning at least one fastening element (12) within a manufacturing mould (20) by means of at least one guide element (25; 35);
- filling the manufacturing mould (20) with a material so as to overmould, i.e. at least partially envelop and set, the at least one fastening element (12) in the material;
- removing the timepiece component (10) from the manufacturing mould (20), this timepiece component (10) being at least partly formed by said material and the at least one fastening element (12), the process being **characterized in that** it comprises an intermediate step which consists in adding a hooking element (14), notably a coupling ring, arranged at least partially around the at least one fastening element (12), notably a hooking element having a honeycomb structure, such as an aluminium or titanium foam.

2. Process for manufacturing a timepiece component (10) according to the preceding claim, **characterized in that** the manufacturing mould (20) comprises at least two complementary half-moulds (22, 23) delimiting a cavity (21) whose shape corresponds or substantially corresponds to that of the timepiece component to be manufactured, and **in that**:
- at least one of said half-moulds (22, 23) comprises the at least one guide element (25) to allow the positioning of the at least one fastening element (12) within the cavity (21) of the manufacturing mould; and/or
- at least one independent component of said half-moulds (22, 23) and of the timepiece component (10) is added to the manufacturing mould (20), this independent component comprising the at least one guide element (25) to allow the positioning of the at least one fastening element (12) within the cavity (21) of the manufacturing mould; and/or
- at least one insert (15) of the timepiece component to be manufactured is positioned within the cavity (21) of said manufacturing mould (20), this insert (15) comprising the at least one guide element (35) to allow the positioning of the at least one fastening element (12) within the cavity (21) of the manufacturing mould, the at least one guide element (35) belonging to the insert (15) in the form of a projection, in particular temporarily fixed to the insert (15) and then removed when the timepiece component is removed from the mould, or of an aperture (155) in the insert (15).

3. Process for manufacturing a timepiece component (10) according to one of the preceding claims, **characterized in that** the at least one guide element (25; 35) is an element projecting in one direction into a cavity (21) of the manufacturing mould (20), notably arranged symmetrically around an axis parallel to said direction, notably cylindrical or frustoconical in shape and/or circular in cross-section to said axis, and **in that** the at least one fastening element (12) extends around the at least one guide element (25; 35), and is notably in the form of a ring of cylindrical or frustoconical shape and/or of annular shape in cross-section to said axis and/or in the form of a seating ring.

4. Process for manufacturing a timepiece component (10) according to one of the preceding claims, **characterized in that** the at least one fastening element (12) is positioned within the cavity (21) of the manufacturing mould (20) and extends over the entire height of this cavity (21) from a first half-mould (22) to a second different half-mould (23), or extends over only part of the height of this cavity (21) between a first half-mould (22) and a second different half-mould (23).

5. Process for manufacturing a timepiece component (10) according to one of the preceding claims, **characterized in that** it comprises an intermediate step which consists in texturing and/or adding a binding primer to a surface of the at least one fastening element (12) intended to receive the overmoulding of said material.

6. Process for manufacturing a timepiece component according to one of the preceding claims, **characterized in that** the step which consists in filling the manufacturing mould (20) with a material consists of pressure injection of said material into a cavity (21) of the manufacturing mould (20) or consists of compression moulding of a blank of said material.

7. Process for manufacturing a timepiece component according to one of the preceding claims, **characterized in that** it comprises a step of setting an ornamental element (13) into the at least one fastening element (12), notably by driving.

8. Timepiece component (10), in particular a bracelet strand, comprising at least one fastening element (12), the timepiece component (10) being based on an overmoulded material at least partially enveloping and setting said at least one fastening element (12) within the timepiece component (10) and comprising a hooking element (14), notably a coupling ring, arranged at least partially around the at least one fastening element (12), notably a hooking element having a honeycomb structure, such as an aluminium or titanium foam, in which said material is inserted.

9. Timepiece component (10), in particular a bracelet strand, according to the preceding claim, **characterized in that** the at least one fastening element (12) is in the form of a ring of cylindrical or frustoconical shape and/or of annular cross-sectional shape, and/or in the form of a seating ring.

10. Timepiece component (10), in particular a bracelet strand, according to Claim 8 or 9, **characterized in that** the at least one fastening element (12) extends over the entire height or thickness of the timepiece component (10), or extends over only part of the height of the timepiece component (10).

11. Timepiece component (10), in particular a bracelet strand, according to one of Claims 8 to 10, **characterized in that** it comprises at least one insert (15) on which the at least one fastening element (12) rests or is set, notably around a projection or in an aperture (155) of the insert (15) or on a surface of the insert (15).

12. Timepiece component (10), in particular a bracelet strand, according to one of Claims 8 to 11, **characterized in that** the at least one fastening element (12) comprises a textured surface and/or a surface comprising a binding primer on which said material is overmoulded.

13. Timepiece component (10), in particular a bracelet strand, according to one of Claims 8 to 12, **characterized in that** said material is a thermoplastic or thermosetting polymer or an elastomer or elastomer-based material, notably a fluoro elastomer (FKM, FFKM or FEPM), or a natural rubber (NR) or synthetic rubber (SBR, HNBR, EPDM), or a vinyl methyl silicone (VMQ) or a fluoro silicone (FVMQ), and/or **in that** the at least one fastening element (12) is made of metal or of metal alloy.

14. Timepiece component (10), in particular a bracelet strand, according to one of Claims 8 to 13, **characterized in that** it comprises an ornamental element (13), such as a stone in a chaton or a one-piece element, set, notably by driving, into the at least one fastening element (12) or **in that** it comprises several fastening elements (12) forming fastening portions of a bracelet strand, such as holes for a pin buckle.

15. Timepiece, notably a wristwatch, **characterized in that** it comprises at least one timepiece component (10) according to one of Claims 8 to 14.
